# EUROPEAN PATENT SPECIFICATION

(11) **EP 4 046 244 B1**
(45) Date of publication and mention of the grant of the patent: **01.05.2024**
(21) Application number: 20785725.1
(22) Date of filing: 30.09.2020
(51) Int. Cl.: H01R 25/16, A47F 3/00

(54) **SHELF POWER SUPPLY DEVICE**
STROMVERSORGUNGSVORRICHTUNG FÜR REGALE
DISPOSITIF D'ALIMENTATION ÉLECTRIQUE D'ÉTAGÈRE

(30) Priority: 03.01.2020 CN 202010006938
(43) Date of publication of application: 24.08.2022
(73) Proprietor: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: CHEN, Dong, Ningbo, Zhejiang 315103 (CN); LIU, Xiaoyun, Ningbo, Zhejiang 315103 (CN); XU, Kai, Ningbo, Zhejiang 315103 (CN); DONG, Jianguo, Ningbo, Zhejiang 315103 (CN)
(74) Representative: 2K Patentanwälte Blasberg Kewitz & Reichel
(86) International application number: PCT/EP2020/077331
(87) International publication number: WO 2021/136606

(56) References cited:
- EP-A1- 3 444 908
- CN-U- 205 811 207
- GB-A- 2 352 885
- US-A- 1 606 870
- US-A1- 2013 102 194

## Description

### FIELD OF THE TECHNOLOGY

The present invention relates to the field of power supply technology, with particular emphasis on a shelf power supply device.

### BACKGROUND OF THE INVENTION

Displays are generally realized by means of shelves or showcases, which often need to use electrical equipment, such as LED lighting. LED lighting needs to be powered by wires, which brings inconvenience for installation and increases installation costs. Shelves are provided with an up or down adjustment function. When placing different products on the shelves, the height of the shelf layer boards needs to be adjusted up or down, and the fixed-length wire cannot make the layer board easy to move. The wire must be removed and then reinstalled at the new height of the layer board. In addition, the wire exposure will affect the appearance and increase safety risks.

In the prior art, in order to solve the above-mentioned problems, some power supply rails and power supply heads arranged on them have been proposed to implement the afore-mentioned power supply demand. In order to change the power supply position when the position of the shelf changes and the lamp installation position changes, the wires on the power supply track are usually bare and are not waterproof, and they are easily corroded after a long time, which reduces the service life.

CN 205811207 U discloses a shelf power supply device according to the preamble of claim 1. The power supply head is, however, not slidable. Moreover, the shelf power supply does not include a flexible wire arranged inside the strip-shaped power supply cavity.

US 1 606 870 A discloses an adjustable fixture with concealed wiring, comprising in combination a panel having a longitudinal slot, a light fixture extending through the slot, friction elements attached thereto, one on the inside of the panel and the other on the outside of the panel therebelow, a fixed electric plug positioned behind the panel and a movable flexible electric cord from the plug to the fixture, whereby the fixture may be freely moved in the slot and retained in position by the weight of the fixture forcing the friction elements to engage the panel.

### BRIEF SUMMARY OF THE INVENTION

It is an object of the present invention to provide a shelf power supply device of simple structure, that is flexible in use, that is suitable for power supply in a changeable shelf and that also has a good waterproof effect.

This problem is solved by a shelf power supply device as claimed by claim 1. Further advantageous embodiments are the subject-matter of the dependent claims.

The present invention provides a shelf power supply device comprising a strip-shaped power supply cavity, a fixed power supply terminal and a power supply head, wherein: the strip-shaped power supply cavity is provided with a strip-shaped mounting hole extending along the length direction of its side wall; the fixed power supply terminal is arranged inside the strip-shaped power supply cavity; the power supply head is positioned or arranged on the strip-shaped mounting hole, and comprises a power supply part located inside the strip-shaped power supply cavity and an output part located outside the electrical cavity. According to the present invention the shelf power supply device further comprises a flexible wire having two ends, wherein the power supply head is positioned to be slidable on the strip-shaped mounting hole, and the flexible wire is arranged inside the strip-shaped power supply cavity. The fixed power supply terminal comprises a power supply wire passing through the strip-shaped power supply cavity and fixed at both ends thereof and a power supply block fixedly connected to the power supply wire and connected to the flexible wire. A first end of the flexible wire is connected to the fixed power supply terminal and a second end of the flexible wire is connected to the power supply part, wherein, when the power supply head is far from or close to the fixed power supply terminal, the flexible wire is stretched or bent correspondingly in the strip-shaped power supply cavity.

According to a further embodiment, the output part is provided with a plug or socket for external power supply.

According to a further embodiment, a protective cover is provided on the socket.

According to a further embodiment, the output part is provided with a virtual socket having the same shape as the socket and matching with the protective cover.

According to a further embodiment, the fixed power supply terminal is divided into a positive fixed power supply terminal and negative fixed power supply terminal, and correspondingly, the flexible wire is divided into a positive flexible wire and a negative flexible wire, wherein a respective first end of the positive flexible wire and of the negative flexible wire is connected to the corresponding fixed power supply terminal, and a respective second end of the positive flexible wire and of the negative flexible wire is connected to the same power supply head.

According to a further embodiment, in the length direction of the strip-shaped power supply cavity, the positive flexible wire and the negative flexible wire are respectively located on opposite sides of the power supply head.

According to a further embodiment, the positive fixed power supply terminal and the negative fixed power supply terminal are arranged opposite to each other.

According to a further embodiment, the projection of the power supply head on the cross section of the strip-shaped power supply cavity along the length direction of the strip-shaped power supply cavity is located between the positive fixed power supply terminal and the negative fixed power supply terminal.

According to a further embodiment, the power supply head and the strip-shaped power supply cavity are positioned by friction.

### Technical effects of the present invention:

The shelf power supply device of the present invention is provided with a positionable and movable power supply head on the strip-shaped power supply cavity, and a flexible wire is arranged inside the strip-shaped power supply cavity to cooperate with the movement of the power supply head for power supply. The structure is simple, flexible in use, and suitable for power supply in the changeable shelf, and also has good waterproof effect.

### BRIEF DESCRIPTION OF THE DRAWINGS

The following describes embodiments of the present invention with reference to the accompanying drawings, in which:
FIG 1 is a schematic diagram of the three-dimensional structure of the shelf power supply device of this embodiment.
FIG 2 is an enlarged schematic diagram of part A in FIG 1.
FIG 3 is a schematic structural diagram of the shelf power supply device wherein the protective cover in FIG.2 is removed.
FIG 4 is a schematic diagram of the three-dimensional structure of the shelf power supply device with the strip-shaped power supply cavity removed of this embodiment.
FIG 5 is an enlarged schematic diagram of part B in FIG 4.
FIG 6 is a schematic diagram of the structure of FIG. 5 at another angle (front view).
FIG 7 is a schematic cross-sectional view of the shelf power supply device of the embodiment at the power supply head.

### DETAILED DESCRIPTION OF THE INVENTION

Hereinafter, specific embodiments of the present invention will be described in further detail based on the drawings. It should be understood that the description of the embodiments of the present invention is not intended to limit the scope of protection of the present invention.

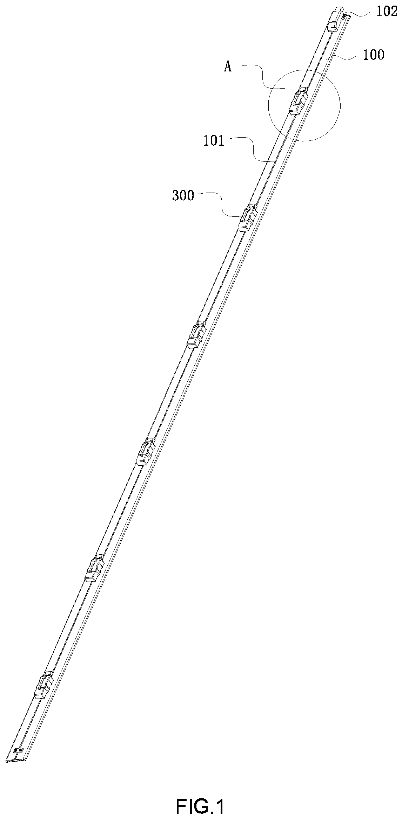

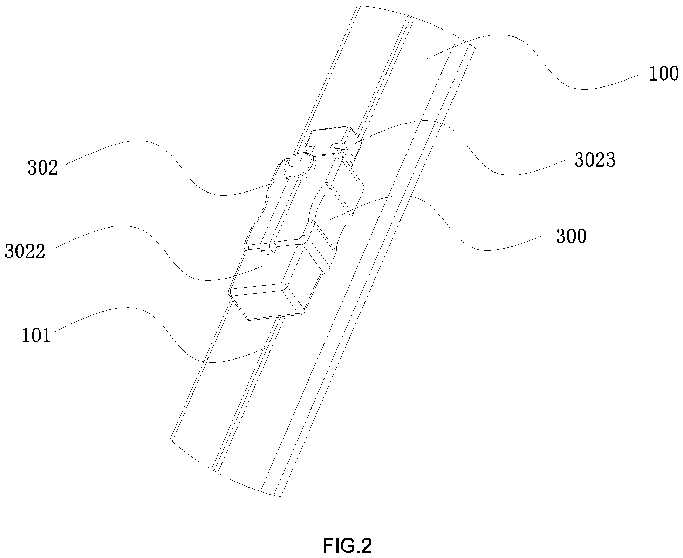

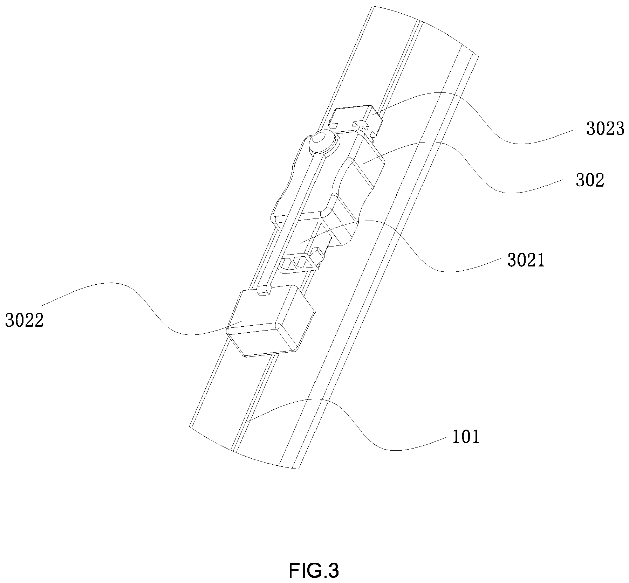

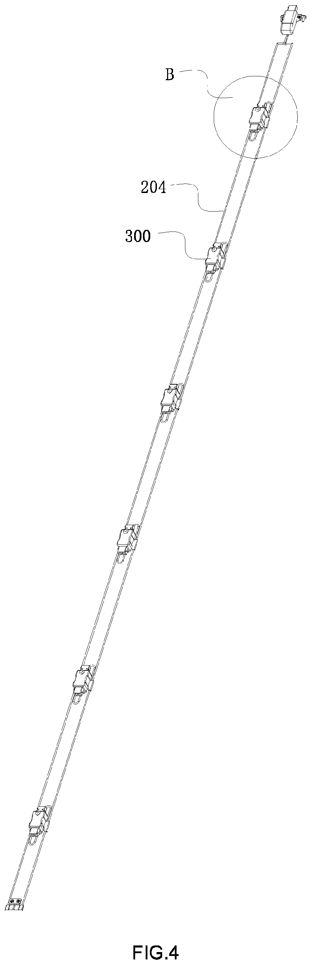

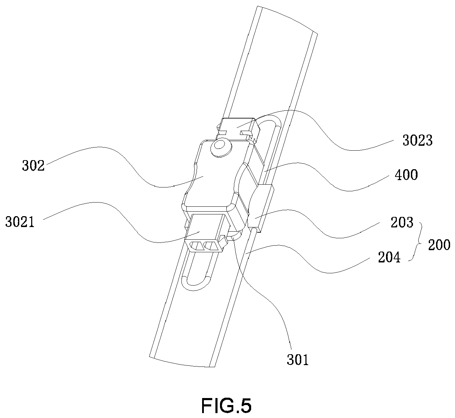

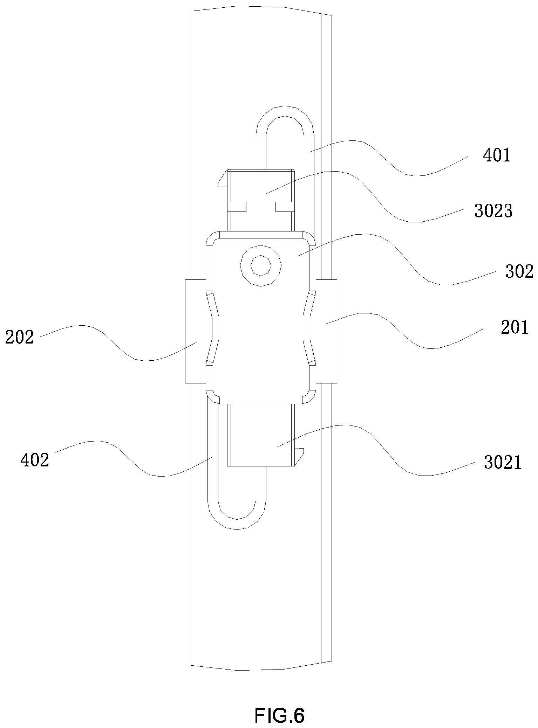

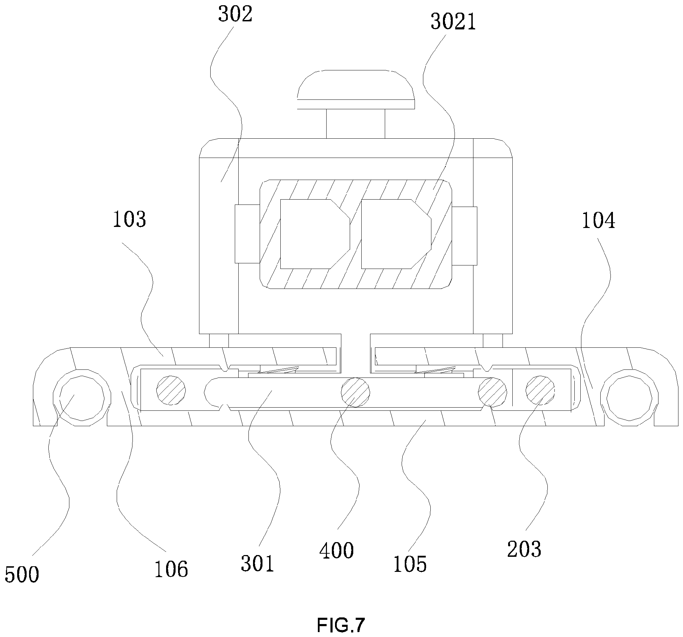

As shown in Figs. 1 to 7, the shelf power supply device of this embodiment includes a strip-shaped power supply cavity 100, a fixed power supply terminal 200, a power supply head 300, and a flexible wire 400.

At least one set of cooperating members including a fixed power supply terminal 200, a power supply head 300 and a flexible wire 400 is provided in the strip-shaped power supply cavity 100, which can be set according to the number of shelves, and a corresponding strip-shaped mounting hole 101 is provided for each set. The strip-shaped mounting holes 101 on the strip-shaped power supply cavity 100 can be connected to each other or partitioned. In this embodiment, six groups or sets, each including a fixed power supply terminal 200, a power supply head 300 and a flexible wire 400 matched to each other, are provided in the strip-shaped power supply cavity 100, and the strip-shaped mounting holes 101 are connected with each other. In fact, in order to facilitate production and installation, in this embodiment, the strip-shaped mounting holes 101 are connected to each other and are connected to both ends of the strip-shaped power supply cavity 100.

The length and direction of the strip-shaped power supply cavity 100 are set according to the power supply requirements, and can be flat or curved, and the strip-shaped power supply cavity 100 can be surrounded by side plates. The side plates can be integral or spliced together. In order to achieve a power supply, at least one fixed power supply terminal 200 is provided inside the strip-shaped power supply cavity 100. The fixed power supply terminal 200 can be positioned directly via the side plate and laterally penetrating from the side plate of the strip-shaped power supply cavity 100 and then fixed, and then it may be externally connected to a main power supply equipment. Or a bus passing through the strip-shaped power supply cavity 100 may be provided, a power supply block 203 may be arranged on the bus, and then the power supply block 203 is fixed to realize the positioning of the fixed power supply terminal 200 in the strip-shaped power supply cavity 100. The fixed power supply terminal 200 includes a power supply wire 204 (that is, a bus) and a power supply block 203. The power supply wire 204 passes through the strip-shaped power supply cavity 100 and is fixed at both ends. The power supply block 203 is fixedly connected to the power supply wire 204 and is connected to the flexible wire 400. In order to facilitate the acquisition of materials and reduce the cost, in this embodiment, the power supply wire 204 is an insulated wire. The power supply wire 204 is used to connect to the power supply bus. For convenience, a connector is generally provided at the end to connect with the external power supply bus. Of course, welding can also be used to achieve electrical connection. In this embodiment, the strip-shaped power supply cavity 100 is provided with a power supply socket 102 at one end.

The fixed power supply terminal 200 is arranged in the strip-shaped power supply cavity 100, and the side wall of the strip-shaped power supply cavity 100 is provided with a strip-shaped mounting hole 101 extending along its length. The power supply head 300 is positioned to slide on the strip mounting hole 101, and the power supply head 300 includes a power supply part 301 located in the strip-shaped power supply cavity 100 and an output part 302 located outside the strip-shaped power supply cavity 100. A flexible wire 400 is provided in the strip-shaped power supply cavity 100, the two ends of the flexible wire 400 are respectively connected to the fixed power supply terminal 200 and the power supply part 301. When the power supply head 300 is far from or close to the fixed power supply terminal 200, the flexible wire 400 is stretched or bent in the strip-shaped power supply cavity 100.

The strip-shaped power supply cavity 100 is provided with at least one power supply head 300 that can moved and positioned in the longitudinal direction of the strip-shaped power supply cavity 100 depending on the requirements, and a flexible wire 400 is arranged in the strip-shaped power supply cavity 100 to cooperate with the movement of the power supply head 300 to supply power. This structure is simple, flexible to use, and suitable for changing shelf power supply. The flexible wire 400 is suitable for the power supply of the shelf, as long as it is waterproof, for example, for example an ordinary insulated wire can be used to achieve a good waterproof effect. The flexible wire 400 is confined in the strip-shaped power supply cavity 100, so that it is not easy to be observed, and thus the shelf is kept neat and beautiful.

When an external electrical appliance is connected to the output part 302, there are various power supply structures. For ease of use, the output part 302 is provided with a plug or socket 3021 for external power supply. The plug 3021 generally has a wire and is directly connected to the electrical appliance. In this embodiment, the socket 3021 is used, which is more flexible in use.

In order to protect the socket 3021 from dust and water, a protective cover 3022 is provided on the socket 3021. In order to prevent the protective cover 3022 from being lost when the socket 3021 is in use, in this embodiment, the output part 302 is provided with a virtual socket 3023 having the same shape as the socket 3021 and matching with the protective cover 3022. The virtual socket 3023 can be made into a solid structure with the same shape as the socket 3021.

The fixed power supply terminal 200 is divided into two groups, namely a group which is positive and a group which is negative. Correspondingly, the flexible wire 400 is divided into a positive flexible wire 401 and a negative flexible wire 402, which are respectively connected to the corresponding fixed power supply terminal 200. The other end of the positive flexible wire 401 and of the negative flexible wire 402 is connected to the same power supply head 300 which is associated to the fixed power supply terminal 200.

In order to provide sufficient bending space for the two flexible wires 401 and 402, in this embodiment, in the length direction of the strip-shaped power supply cavity 100, the positive flexible wire 401 and the negative flexible wire 402 are respectively located on opposite sides of the power supply head 300. The positive fixed power supply terminal 201 and the negative fixed power supply terminal 202 are arranged opposite to each other. In order to make the structure compact, in this embodiment, the projection of the power supply head 300 on the cross section of the strip-shaped power supply cavity 100 along the length direction of the strip-shaped power supply cavity 100 is located between the positive fixed power supply terminal 201 and the negative fixed power supply terminal 202. This configuration allows for a more balanced force on the power supply head 300, and it is not easy to get stuck.

There are many ways to achieve a positioning of the power supply head 300. For ease of operation, the power supply head 300 and the strip-shaped power supply cavity 100 are positioned by friction. When the size of the power supply head 300 is set to be in interference fit with at least a part of the inner wall of the strip-shaped power supply cavity 100, friction positioning can be achieved. The external material of the power supply head 300 can be made of soft rubber, silica gel, etc., to increase friction force.

The shape of the cross-section of the strip-shaped power supply cavity 100 can be designed according to the installation position, and is limited by side plates. When it is applied to common display equipment such as shelves, the surface mount installation method is generally adopted. In order to reduce the volume and reduce installation space, in this embodiment, the strip-shaped power supply cavity 100 is a flat rectangle with a certain width and height. The strip-shaped power supply cavity 100 is surrounded by four side plates, a front cover 103, a left side rail 104, a rear cover 105 and a right side rail 106. The front cover 103, the left side rail 104, the rear cover 105, and the right side rail 106 can be manufactured and assembled using a fastener connection, glue bonding or snap connection technique. For ease of manufacturing, in this embodiment, the front cover 103, the left side rail 104, the rear cover 105 and the right side rail 106 are integrally formed and manufactured. The manufacturing process can be realized by extrusion molding. Generally, the material can be plastic. In this embodiment, PVC is used and the front cover 103 is provided with a strip-shaped mounting hole 101.

In order to further prevent the flexible wire 400 from being wound and overlapping, the condition D<H<2D may apply, wherein H is the distance between the inner walls of the front cover 103 and the rear cover 105 of the strip-shaped power supply cavity 100, and D is the diameter of the flexible wire 400. Thus, the flexible wire 400 is bent and folded in a single plane, avoiding entanglement.

In order to facilitate installation, a magnetic member may be provided on the outer side wall of the strip-shaped power supply cavity 100. In this embodiment, the magnetic member is a cylindrical magnet 500 provided on both sides of the rear cover 105.

## Claims

1. A shelf power supply device comprising a strip-shaped power supply cavity (100), a fixed power supply terminal (200) and a power supply head (300), wherein:
the strip-shaped power supply cavity (100) is provided with a strip-shaped mounting hole (101) extending along the length direction of its side wall;
the fixed power supply terminal (200) is arranged inside the strip-shaped power supply cavity (100);
the power supply head (300) is positioned on the strip-shaped mounting hole (101), and comprises a power supply part (301) located inside the strip-shaped power supply cavity (100) and an output part (302) located outside the strip-shaped power supply cavity (100);
the shelf power supply device further comprises a flexible wire (400) having two ends, wherein
the power supply head (300) is positioned to be slidable on the strip-shaped mounting hole (101) and
the flexible wire (400) is arranged inside the strip-shaped power supply cavity (100), and
a first end of the flexible wire (400) is connected to the fixed power supply terminal (200) and a second end of the flexible wire (400) is connected to the power supply part (301), wherein
, when the power supply head (300) is far from or close to the fixed power supply terminal (200), the flexible wire (400) is stretched or bent correspondingly in the strip-shaped power supply cavity (100),
**characterized in that** the fixed power supply terminal (200) comprises a power supply wire (204) passing through the strip-shaped power supply cavity (100) and fixed at both ends thereof and a power supply block (203) fixedly connected to the power supply wire (204) and connected to the flexible wire (400).

2. The shelf power supply device as claimed in claim 1, wherein the output part (302) of the power supply head (300) is provided with a plug or socket (3021) for external power supply.

3. The shelf power supply device as claimed in claim 2, wherein a protective cover (3022) is provided on the socket (3021).

4. The shelf power supply device as claimed in claim 3, wherein the output part (302) is provided with a virtual socket (3023) having the same shape as the socket (3021) and matching with the protective cover (3022).

5. The shelf power supply device as claimed in any of the preceding claims, wherein the fixed power supply terminal (200) is divided into a positive fixed power supply terminal (201) and negative fixed power supply terminal (202), and correspondingly, the flexible wire (400) is divided into a positive flexible wire (401) and a negative flexible wire (402), a first end of the positive flexible wire (401) being connected to the positive fixed power supply terminal (201) and a first end of the negative flexible wire (402) being connected to the negative fixed power supply terminal (202), and a respective second end of the positive flexible wire (401) and the negative flexible wire (402) being connected to the same power supply head (300).

6. The shelf power supply device as claimed in claim 5, wherein, in the length direction of the strip-shaped power supply cavity (100), the positive flexible wire (401) and the negative flexible wire (402) are respectively located on opposite sides of the power supply head (300).

7. The shelf power supply device as claimed in claim 5, wherein the positive fixed power supply terminal (201) and the negative fixed power supply terminal (202) are arranged opposite to each other.

8. The shelf power supply device as claimed in claim 7, wherein the projection of the power supply head (300) on the cross section of the strip-shaped power supply cavity (100) along the length direction of the strip-shaped power supply cavity (100) is located between the positive fixed power supply terminal (201) and the negative fixed power supply terminal (202).

9. The shelf power supply device as claimed in any of the preceding claims, wherein the power supply head (300) and the strip-shaped power supply cavity (100) are positioned by friction.

10. The shelf power supply device as claimed in claim 9, wherein a size of the power supply head (300) is matched to an inner wall of the strip-shaped power supply cavity (100) to enable an interference fit with at least a part of the inner wall of the strip-shaped power supply cavity (100).

11. The shelf power supply device as claimed in claim 9 or 10, wherein an external material of the power supply head (300) is made of soft rubber or silica gel to increase friction.

12. The shelf power supply device as claimed in any of the preceding claims, wherein the strip-shaped power supply cavity (100) is surrounded by four side plates, a front cover (103), a left side rail (104), a rear cover (105) and a right side rail (106).

13. The shelf power supply device as claimed in claim 12, wherein the front cover (103), the left side rail (104), the rear cover (105) and the right side rail (106) are integrally formed, in particular by extrusion molding, the front cover (103) being provided with the strip-shaped mounting hole (101).

14. The shelf power supply device as claimed in claim 12 or claim 13, wherein a cylindrical magnet (500) is provided on both sides of the rear cover (105) of the strip-shaped power supply cavity (100).

15. The shelf power supply device as claimed in any of the preceding claims, wherein the strip-shaped power supply cavity (100) is provided with a power supply socket (102) at one end thereof, configured to connect the power supply wire (204) with an external power supply bus.

## Patentansprüche

1. Stromversorgungsvorrichtung für Regale mit einem leistenförmigen Hohlraum (100) zur Stromversorgung, einem ortsfesten Stromversorgungsanschluss (200) und einem Stromversorgungskopf (300), wobei:
der leistenförmige Hohlraum (100) zur Stromversorgung mit einer leistenförmigen Montagerille (101) versehen ist, die sich entlang der Längsrichtung seiner Seitenwand erstreckt;
der ortsfeste Stromversorgungsanschluss (200) innerhalb des leistenförmigen Hohlraums (100) zur Stromversorgung angeordnet ist;
der Stromversorgungskopf (300) auf der leistenförmigen Montagerille (101) positioniert ist und einen Stromversorgungsabschnitt (301), der sich innerhalb des leistenförmigen Hohlraums (100) zur Stromversorgung befindet, und einen Ausgabeabschnitt (302) aufweist, der sich außerhalb des leistenförmigen Hohlraums (100) zur Stromversorgung befindet;
die Stromversorgungsvorrichtung für Regale ferner ein flexibles Kabel (400) mit zwei Enden aufweist, wobei
der Stromversorgungskopf (300) so positioniert ist, dass dieser auf der leistenförmigen Montagerille (101) verschiebbar ist, und
das flexible Kabel (400) innerhalb des leistenförmigen Hohlraums (100) zur Stromversorgung angeordnet ist, und
ein erstes Ende des flexiblen Kabels (400) mit dem ortsfesten Stromversorgungsanschluss (200) verbunden ist und ein zweites Ende des flexiblen Kabels (400) mit dem Stromversorgungsabschnitt (301) verbunden ist, wobei
das flexible Kabel (400) in dem leistenförmigen Hohlraum (100) zur Stromversorgung entsprechend gedehnt oder gebogen ist, wenn der Stromversorgungskopf (300) weit von dem ortsfesten Stromversorgungsanschluss (200) entfernt oder nahe zu diesem angeordnet ist;
**dadurch gekennzeichnet, dass**
der ortsfeste Stromversorgungsanschluss (200) ein Kabel (204) zur Stromversorgung, das durch den leistenförmigen Hohlraum (100) zur Stromversorgung verläuft und an dessen beiden Enden befestigt ist, und einen Stromversorgungsblock (204) aufweist, der fest mit dem Kabel (203) Stromversorgung verbunden ist und mit dem flexiblen Kabel (400) verbunden ist.

2. Stromversorgungsvorrichtung für Regale nach Anspruch 1, wobei der Ausgabeabschnitt (302) des Stromversorgungskopfes (300) mit einem Stecker oder einer Buchse (3021) für die externe Stromversorgung versehen ist.

3. Stromversorgungsvorrichtung für Regale nach Anspruch 2, wobei eine Schutzabdeckung (3022) an der Buchse (3021) vorgesehen ist.

4. Stromversorgungsvorrichtung für Regale nach Anspruch 3, wobei der Ausgabeabschnitt (302) mit einer virtuellen Buchse (3023) versehen ist, die die gleiche Form wie die Buchse (3021) hat und auf die Schutzabdeckung (3022) abgestimmt ist.

5. Stromversorgungsvorrichtung für Regale nach einem der vorhergehenden Ansprüche, wobei der ortsfeste Stromversorgungsanschluss (200) in einen positiven ortsfesten Stromversorgungsanschluss (201) und einen negativen ortsfesten Stromversorgungsanschluss (202) unterteilt ist, und wobei das flexible Kabel (400) entsprechend in ein positives flexibles Kabel (401) und ein negatives flexibles Kabel (402) unterteilt ist, wobei ein erstes Ende des positiven flexiblen Kabels (401) mit dem positiven ortsfesten Stromversorgungsanschluss (201) und ein erstes Ende des negativen flexiblen Kabels (402) mit dem negativen ortsfesten Stromversorgungsanschluss (202) verbunden ist, und ein jeweiliges zweites Ende des positiven flexiblen Kabels (401) und des negativen flexiblen Kabels (402) mit demselben Stromversorgungskopf (300) verbunden ist.

6. Stromversorgungsvorrichtung für Regale nach Anspruch 5, wobei in der Längsrichtung des leistenförmigen Hohlraums (100) zur Stromversorgung das positive flexibles Kabel (401) und das negative flexibles Kabel (402) jeweils auf gegenüberliegenden Seiten des Stromversorgungskopfes (300) angeordnet sind.

7. Stromversorgungsvorrichtung für Regale nach Anspruch 5, wobei der positive ortsfeste Stromversorgungsanschluss (201) und der negative ortsfeste Stromversorgungsanschluss (202) einander gegenüberliegend angeordnet sind.

8. Stromversorgungsvorrichtung für Regale nach Anspruch 7, wobei der Vorsprung des Stromversorgungskopfes (300) auf dem Querschnitt des leistenförmigen Hohlraums (100) zur Stromversorgung entlang der Längsrichtung des leistenförmigen Hohlraums (100) zur Stromversorgung zwischen dem positiven ortsfesten Stromversorgungsanschluss (201) und dem negativen ortsfesten Stromversorgungsanschluss (202) angeordnet ist.

9. Stromversorgungsvorrichtung für Regale nach einem der vorhergehenden Ansprüche, wobei der Stromversorgungskopf (300) und der leistenförmige Hohlraum (100) zur Stromversorgung durch einen Reibschluss positioniert sind.

10. Stromversorgungsvorrichtung für Regale nach Anspruch 9, wobei eine Größe des Stromversorgungskopfes (300) an eine Innenwand des leistenförmigen Hohlraums (100) zur Stromversorgung angepasst ist, um eine Presspassung mit mindestens einem Teil der Innenwand des leistenförmigen Hohlraums (100) zur Stromversorgung zu ermöglichen.

11. Stromversorgungsvorrichtung für Regale nach Anspruch 9 oder 10, wobei ein Außenmaterial des Stromversorgungskopfes (300) aus Weichgummi oder Silikagel besteht, um die Reibung zu erhöhen.

12. Stromversorgungsvorrichtung für Regale nach einem der vorhergehenden Ansprüche, wobei der leistenförmige Hohlraum (100) zur Stromversorgung von vier Seitenplatten, einer vorderen Abdeckung (103), einer linken Seitenschiene (104), einer hinteren Abdeckung (105) und einer rechten Seitenschiene (106) umgeben ist.

13. Stromversorgungsvorrichtung für Regale nach Anspruch 12, wobei die vordere Abdeckung (103), die linke Seitenschiene (104), die hintere Abdeckung (105) und die rechte Seitenschiene (106) einstückig, insbesondere durch Strangpressen, ausgebildet sind, wobei die vordere Abdeckung (103) mit der leistenförmigen Montagerille (101) versehen ist.

14. Stromversorgungsvorrichtung für Regale nach Anspruch 12 oder 13, wobei ein zylindrischer Magnet (500) auf beiden Seiten der hinteren Abdeckung (105) des leistenförmigen Hohlraums (100) zur Stromversorgung vorgesehen ist.

15. Stromversorgungsvorrichtung für Regale nach einem der vorhergehenden Ansprüche, wobei der leistenförmige Hohlraum (100) zur Stromversorgung an seinem einen Ende mit einer Stromversorgungsbuchse (102) versehen ist, die so konfiguriert ist, dass sie das Kabel (204) zur Stromversorgung mit einem externen Stromversorgungsbus verbindet.

## Revendications

1. Un dispositif d'alimentation d'étagère comprenant une cavité d'alimentation en forme de bande (100), une borne d'alimentation fixe (200) et une tête d'alimentation (300), dans lequel :
la cavité d'alimentation en forme de bande (100) est pourvue d'un trou de montage en forme de bande (101) s'étendant le long de la direction de la longueur de sa paroi latérale :
la borne d'alimentation fixe (200) est disposée à l'intérieur de la cavité d'alimentation en forme de bande (100) ;
la tête d'alimentation (300) est positionnée sur le trou de montage en forme de bande (101) et comprend une partie d'alimentation (301) située à l'intérieur de la cavité d'alimentation en forme de bande (100) et une partie de sortie (302) située à l'extérieur de la cavité d'alimentation en forme de bande (100) ;
le dispositif d'alimentation de l'étagère comprend en outre un fil flexible (400) à deux extrémités, dans lequel
la tête d'alimentation (300) est positionnée de manière à pouvoir coulisser sur le trou de montage en forme de bande (101) et
le fil flexible (400) est disposé à l'intérieur de la cavité d'alimentation en forme de bande (100), et
une première extrémité du fil flexible (400) est connectée à la borne d'alimentation fixe (200) et une seconde extrémité du fil flexible (400) est connectée à la pièce d'alimentation (301), dans laquelle
lorsque la tête d'alimentation (300) est éloignée ou proche de la borne d'alimentation fixe (200), le fil flexible (400) est étiré ou plié en conséquence dans la cavité d'alimentation en forme de bande (100) ;
**caractérisé par le fait que**
la borne d'alimentation fixe (200) comprend un fil d'alimentation (204) traversant la cavité d'alimentation en forme de bande (100) et fixé à ses deux extrémités, ainsi qu'un bloc d'alimentation (204) relié de manière fixe au fil d'alimentation (203) et connecté au fil flexible (400).

2. Le dispositif d'alimentation d'étagère selon la revendication 1, dans lequel la partie de sortie (302) de la tête d'alimentation (300) est pourvue d'une fiche ou d'une prise (3021) pour l'alimentation électrique externe.

3. Le dispositif d'alimentation d'étagère selon la revendication 2, dans lequel un couvercle de protection (3022) est prévu sur la prise (3021).

4. Le dispositif d'alimentation d'étagère selon la revendication 3, dans lequel la partie de sortie (302) est pourvue d'une prise virtuelle (3023) ayant la même forme que la prise (3021) et correspondant au couvercle de protection (3022).

5. Le dispositif d'alimentation d'étagère selon l'une quelconque des revendications précédentes, dans lequel la borne d'alimentation fixe (200) est divisée en une borne d'alimentation fixe positive (201) et une borne d'alimentation fixe négative (202), et de manière correspondante, le fil flexible (400) est divisé en un fil flexible positif (401) et un fil flexible négatif (402), une première extrémité du fil flexible positif (401) étant connectée à la borne d'alimentation fixe positive (201) et une première extrémité du fil flexible négatif (402) étant connectée à la borne d'alimentation fixe négative (202), et une seconde extrémité respective du fil flexible positif (401) et du fil flexible négatif (402) étant connectée à la même tête d'alimentation (300).

6. Le dispositif d'alimentation d'étagère selon la revendication 5, dans lequel, dans le sens de la longueur de la cavité d'alimentation électrique en forme de bande (100), le fil flexible positif (401) et le fil flexible négatif (402) sont respectivement situés sur les côtés opposés de la tête d'alimentation électrique (300).

7. Le dispositif d'alimentation d'étagère selon la revendication 5, dans lequel la borne fixe positive d'alimentation électrique (201) et la borne fixe négative d'alimentation électrique (202) sont disposées à l'opposé l'une de l'autre.

8. Le dispositif d'alimentation d'étagère selon la revendication 7, dans lequel la projection de la tête d'alimentation électrique (300) sur la section transversale de la cavité d'alimentation électrique en forme de bande (100) le long de la direction de la longueur de la cavité d'alimentation électrique en forme de bande (100) est située entre la borne d'alimentation électrique fixe positive (201) et la borne d'alimentation électrique fixe négative (202).

9. Le dispositif d'alimentation d'étagère selon l'une quelconque des revendications précédentes, dans lequel la tête d'alimentation électrique (300) et la cavité d'alimentation électrique en forme de bande (100) sont positionnées par frottement.

10. Le dispositif d'alimentation d'étagère selon la revendication 9, dans lequel une taille de la tête d'alimentation électrique (300) est adaptée à une paroi intérieure de la cavité d'alimentation électrique en forme de bande (100) pour permettre un ajustement serré avec au moins une partie de la paroi intérieure de la cavité d'alimentation électrique en forme de bande (100).

11. Le dispositif d'alimentation d'étagère selon la revendication 9 ou 10, dans lequel un matériau externe de la tête d'alimentation électrique (300) est en caoutchouc souple ou en gel de silice pour augmenter la friction.

12. Le dispositif d'alimentation d'étagère selon l'une quelconque des revendications précédentes, dans lequel la cavité d'alimentation électrique en forme de bande (100) est entourée de quatre plaques latérales, d'un couvercle avant (103), d'un rail latéral gauche (104), d'un couvercle arrière (105) et d'un rail latéral droit (106).

13. Le dispositif d'alimentation d'étagère selon la revendication 12, dans lequel le couvercle avant (103), le rail latéral gauche (104), le couvercle arrière (105) et le rail latéral droit (106) sont formés d'un seul tenant, notamment par moulage par extrusion, le couvercle avant (103) étant pourvu du trou de montage en forme de bande (101).

14. Le dispositif d'alimentation d'étagère selon la revendication 12 ou 13, dans lequel un aimant cylindrique (500) est prévu de part et d'autre du couvercle arrière (105) de la cavité d'alimentation électrique en forme de bande (100).

15. Le dispositif d'alimentation d'étagère selon l'une quelconque des revendications précédentes, dans lequel la cavité d'alimentation électrique en forme de bande (100) est pourvue d'une prise d'alimentation électrique (102) à l'une de ses extrémités, configurée pour connecter le fil d'alimentation électrique (204) à un bus d'alimentation électrique externe.
